# FASCICULE DE BREVET EUROPEEN

(11) **EP 1 154 926 B1**
(45) Date de publication et mention de la délivrance du brevet: **31.03.2004**
(21) Numéro de dépôt: 00901714.6
(22) Date de dépôt: 04.02.2000
(51) Int. Cl.: B62D 25/16, B60R 13/04

(54) **DISPOSITIF DE FIXATION D'UN ELARGISSEUR D'AILE INTEGRE A UN PARE-CHOCS**
VORRICHTUNG ZUR BEFESTIGUNG EINER AN EINER STOSSSTANGE INTEGRIERTEN KOTFLÜGELVERBREITERUNG
DEVICE FOR FIXING A FENDER FLARE INTEGRATED IN A BUMPER

(30) Priorité: 19.02.1999 FR 9902063
(43) Date de publication de la demande: 21.11.2001
(73) Titulaire: Renault s.a.s., 92100 Boulogne Billancourt (FR)
(72) Inventeur: POURRIAS, Jean-Yves, F-92160 Antony (FR); SAILLARD, Patrick, F-94100 Saint Maur des Fossés (FR); TARENBERQUE, Eric, F-91570 Bièvres (FR)
(86) Numéro de dépôt international: PCT/FR2000/000265
(87) Numéro de publication internationale: WO 2000/048895

(56) Documents cités:
- US-A- 4 115 974
- PATENT ABSTRACTS OF JAPAN vol. 1998, no. 13, 30 novembre 1998 (1998-11-30) & JP 10 226285 A (DAIHATSU MOTOR CO LTD), 25 août 1998 (1998-08-25)
- PATENT ABSTRACTS OF JAPAN vol. 1996, no. 08, 30 août 1996 (1996-08-30) & JP 08 091143 A (SUZUKI MOTOR CORP), 9 avril 1996 (1996-04-09)

## Description

La présente invention se rapporte à un dispositif de fixation d'un élargisseur d'aile intégré à un pare-chocs de véhicule automobile et plus particulièrement à un dispositif de fixation d'un élargisseur obtenu directement de moulage avec un pare-chocs et destiné à recouvrir une aile en matière plastique.

Il est connu, sur des véhicules automobiles, des pare-chocs en matière plastique comportant des élargisseurs d'aile venant prolonger une aile métallique autour du passage de roue, l'élargisseur venant alors en bordure de l'aile métallique pour se fixer sur cette dernière au moyen de vis de fixation.

On connaît également , par la publication JP-A-10226285, un dispositif de fixation d'un élément moulé sur un élargisseur d'aile. Le bord de l'élément moulé comporte des rainures aptes à coopérer avec des nervures situées sur l'élargisseur. Des clips permettent de fixer l'élargisseur d'aile sur l'aile.

Toutefois, lorsque l'aile du véhicule est également en matière plastique, la dilatation de l'aile par rapport à l'élargisseur nécessite de prévoir un dispositif de fixation autorisant le coulissement de l'aile par rapport à l'élargisseur et qui assure également le positionnement géométrique des différents éléments de carrosserie. En particulier, lorsque l'élargisseur vient recouvrir une partie de la surface extérieure de l'aile, pour augmenter la largeur du véhicule par exemple, il convient d'utiliser un dispositif de fixation assurant le maintien de l'élargisseur contre l'aile, pour éviter l'apparition de jeux inesthétiques entre ses deux éléments de carrosserie, et qui autorise la dilatation différentielle de l'aile par rapport à l'élargisseur.

Le but de la présente invention est donc de proposer un dispositif de fixation pour élargisseur d'aile intégré à un pare-chocs assurant le maintien de l'élargisseur contre l'aile, tout en autorisant une forte dilatation différentielle de ces derniers pour permettre l'utilisation d'ailes en matière plastique, et qui soit simple et économique à réaliser.

L'invention a pour objet un dispositif de fixation d'un élargisseur d'aile intégré à un pare-chocs en matière plastique, l'élargisseur d'aile recouvrant au moins partiellement une aile en matière plastique.

Selon l'invention, le dispositif de fixation est caractérisé en ce que l'élargisseur est relié à l'aile par des moyens de fixation assurant le maintien de l'élargisseur contre l'aile et autorisant le coulissement de l'élargisseur d'aile sur l'aile selon l'axe de dilatation préférentielle.

Selon une caractéristique du dispositif de fixation selon l'invention, les moyens de fixation sont constitués de clips montés coulissants dans des glissières portées par la face intérieure de l'élargisseur d'aile, les clips présentant une tête expansible convergente venant s'insérer, par simple poussée, dans un trou ajusté de l'aile.

Selon une autre caractéristique du dispositif de fixation, les glissières sont obtenues directement de moulage avec l'aile plastique.

Selon une autre caractéristique du dispositif de fixation, les glissières sont orientées dans la direction de dilatation préférentielle de l'élargisseur par rapport à l'aile et présentent une longueur très faiblement supérieure à la longueur nécessaire à la dilatation, le diamètre des trous et l'extrémité convergente des clips étant adaptés pour garantir l'autocentrage du clip dans la glissière, lors de la mise en vis-à-vis de l'élargisseur par rapport à l'aile.

Selon encore une autre caractéristique du dispositif de fixation, les clips comportent un corps cylindrique muni de deux épaulements venant de part et d'autre des bords de la glissière, lesdits clips étant insérés dans les glissières par une extrémité ouverte divergente de la glissière, cette dernière présentant un resserrement local assurant le maintien du clip dans la glissière.

Selon encore une autre caractéristique du dispositif de fixation, le pare-chocs est divisé en plusieurs parties et comporte des parties latérales présentant un élément de guidage venant coopérer avec le bord de l'aile en regard pour guider l'élargisseur contre l'aile lors du montage du pare-chocs.

Selon une autre caractéristique du dispositif de fixation, l'élément de guidage comporte une patte horizontale venant s'insérer dans une rainure du bord de l'aile pour guider verticalement l'élargisseur sur l'aile.

Selon une autre caractéristique du dispositif de fixation, la patte horizontale est bordée d'une paroi verticale se rapprochant progressivement de la peau intérieure du pare-chocs dans la direction de montage du pare-chocs, la paroi verticale venant plaquer transversalement la partie latérale du pare-chocs contre la surface extérieure de l'aile lors du montage de cette dernière.

Selon encore une autre caractéristique du dispositif de fixation, l'élargisseur comporte un pion pilote coopérant avec un trou de l'aile pour positionner précisément l'élargisseur par rapport à l'aile, le trou étant disposé à proximité de l'extrémité de l'aile en bordure du phare du véhicule pour que le pion pilote bloque transversalement l'aile à cet endroit.

L'invention concerne également un procédé de montage d'un pare-chocs comportant un élargisseur d'aile muni d'un dispositif de fixation selon l'invention, caractérisé en ce qu'on approche les parties latérales du pare-chocs parallèlement à l'axe longitudinal du véhicule en engageant la patte de guidage à l'intérieur de la rainure de l'aile en regard, jusqu'à ce que le pion pilote s'engage dans le trou de l'aile adapté, les clips de fixation de l'élargisseur étant ensuite insérés dans l'aile par simple poussée.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- la figure 1 est une vue en perspective d'une face avant de véhicule automobile munie d'un pare-chocs intégrant un élargisseur d'aile relié à l'aile au moyen d'un dispositif de fixation selon l'invention ;
- la figure 2 est une vue de côté partielle, suivant la flèche II, du pare-chocs et de l'aile au niveau du dispositif de fixation de l'élargisseur d'aile de la figure 1 ;
- la figure 3 est une section suivant la ligne III-III du dispositif de fixation de l'élargisseur d'aile de la figure 2 ;
- la figure 4 est une section suivant la ligne IV-IV du dispositif de fixation de l'élargisseur d'aile de la figure 2 ;
- la figure 5 est une section suivant la ligne V-V du dispositif de fixation de l'élargisseur d'aile de la figure 2.

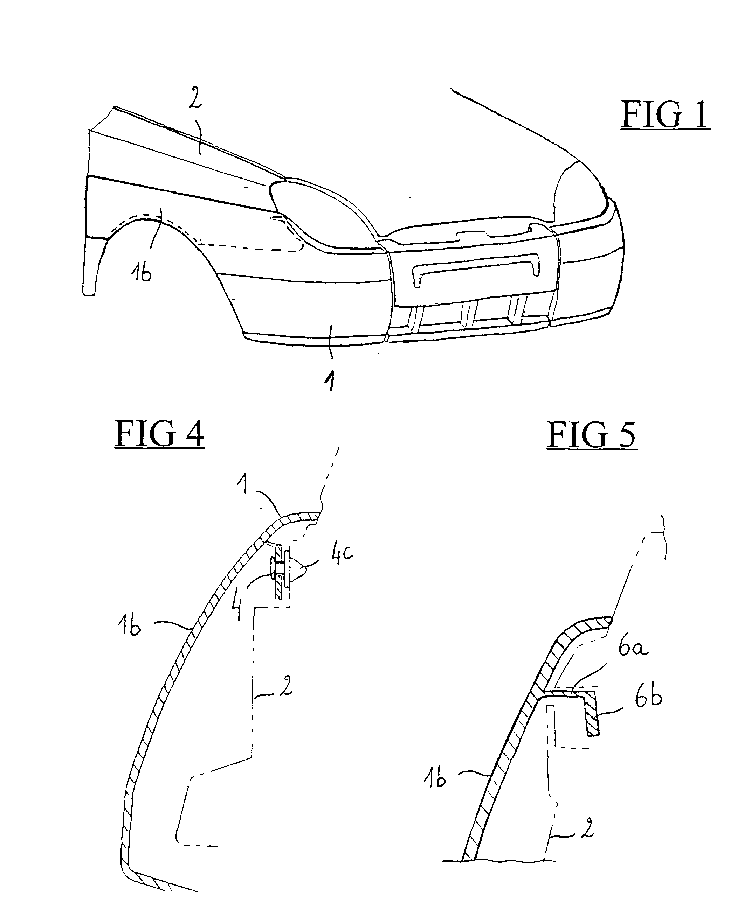

La figure 1 représente une face avant de véhicule automobile comportant un pare-chocs 1 et des ailes 2 en matière plastique, le bord arrière de ces dernières étant fixé rigidement sur le pied avant du véhicule et le bord supérieur des ailes 2 étant monté sur la structure du véhicule, de manière connue en soi, au moyen d'agrafe de fixation coulissante.

Dans le mode de réalisation particulier de l'invention représenté sur la figure 1, le pare-chocs 1 est divisé en trois parties et comporte une partie centrale s'étendant entre les deux phares du véhicule et deux parties latérales s'étendant de part et d'autre de la partie centrale. Chaque partie latérale du pare-chocs se prolonge sur le côté du véhicule et recouvre la partie basse de l'aile 2 autour du passage de roue pour former un élargisseur d'aile 1b.

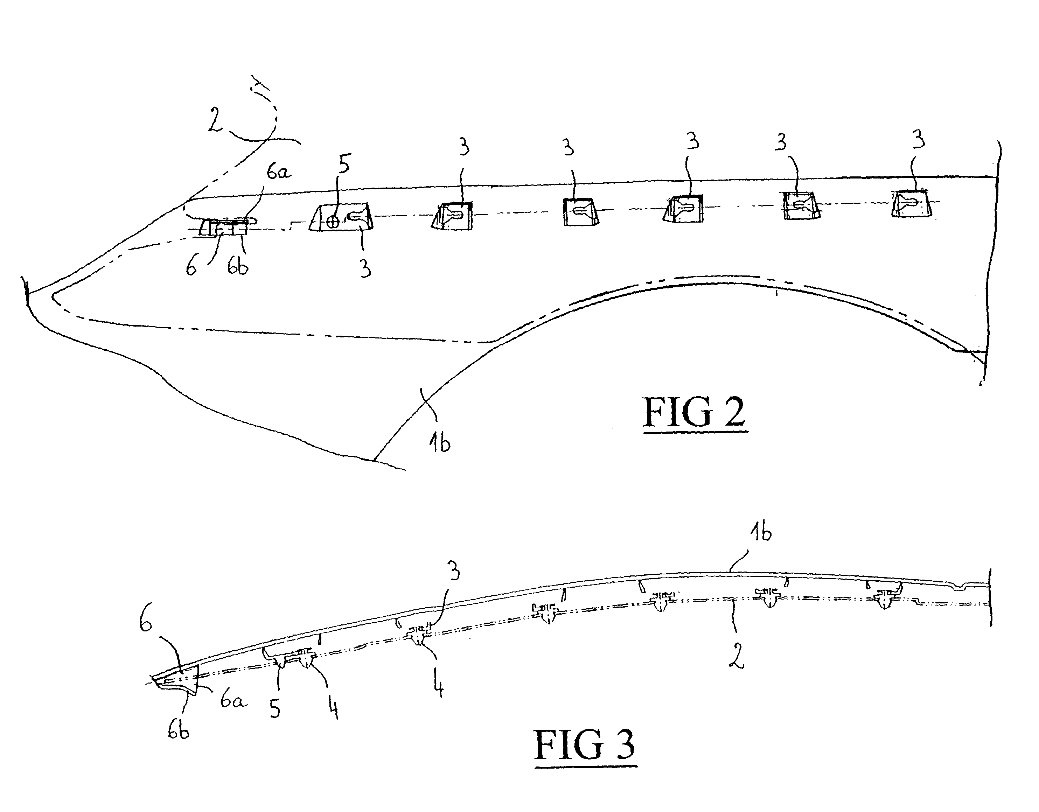

Conformément à la figure 2, la peau intérieure du pare-chocs 1 comporte, à proximité du bord supérieur de l'élargisseur d'aile 1b, des glissières 3 destinées à recevoir des clips de fixation 4, ces derniers servant à maintenir l'élargisseur 1b contre l'aile 2. Les glissières 3 sont disposées à proximité du bord supérieur de l'élargisseur 1b, sensiblement suivant l'axe de dilatation préférentielle de l'élargisseur 1b par rapport à l'aile plastique 2, et leur longueur est adaptée pour permettre la translation du clip 4 lors de la dilatation de l'aile 2 par rapport à l'élargisseur d'aile 2. Dans le mode de réalisation préférentiel de l'invention représenté, les glissières sont obtenues directement par moulage avec la partie latérale du pare-chocs.

Chaque glissière 3 possède une extrémité ouverte divergente permettant la mise en place d'un clip de fixation 4, ce dernier présentant un corps cylindrique bordé de deux épaulements 4a et 4b venant de part et d'autre de la glissière 3. Avantageusement, l'extrémité ouverte divergente de la glissière 3 comporte un rétrécissement local, ce dernier assurant le maintien du clip 4 à l'intérieur de la glissière 3 et évitant ainsi son retrait accidentel lors des manipulations liées au montage du pare-chocs.

L'aile 2 comporte, en regard de chaque glissière 3, un trou obtenu directement de moulage avec l'aile 2 et centré par rapport à la glissière 3 pour recevoir la tête 4c d'un clip de fixation 4. Conformément à la figure 4, la tête 4c du clip de fixation 4 possède une forme conique expansible et présente une gorge dans laquelle vient se bloquer la paroi de l'aile plastique 2.

La glissière 3 la plus proche de l'extrémité avant du véhicule comporte un pion pilote 5 à tête conique faisant saillie en direction de l'aile 2, cette dernière présentant, en regard, un trou ajusté au diamètre du pion pilote 5 et adapté pour recevoir le pion pilote 5 lorsque l'élargisseur 1b est correctement positionné par rapport à l'aile 2.

L'élargisseur 1b est également muni d'une patte de guidage 6 faisant saillie sur la face intérieure du pare-chocs et venant coopérer avec une rainure 2a du bord avant de l'aile 2 pour guider la partie latérale du pare-chocs 1 relativement à l'aile 2. Conformément à la figure 5, la patte de guidage 6 comporte une paroi horizontale 6a bordée d'une paroi verticale 6b, la paroi horizontale 6a présentant une forme sensiblement triangulaire permettant le rapprochement progressif de la paroi verticale 6b contre la peau intérieure de l'élargisseur 1b en direction de l'avant du véhicule.

Le montage et la fixation de l'élargisseur d'aile intégré au pare-chocs vont maintenant être décrits.

L'aile plastique 2 étant déjà montée sur le véhicule, l'opérateur amène la partie latérale du pare-chocs 1 suivant l'axe longitudinal du véhicule et engage la patte de guidage 6 dans la rainure 2a du bord avant de l'aile 2. La partie latérale du pare-chocs 1 est alors guidée verticalement par la paroi horizontale 6a qui prend appui contre la rainure 2a. En poursuivant la poussée du pare-chocs 1 en direction de l'arrière du véhicule, la paroi verticale 6b vient au contact de l'aile 2, plaquant l'élargisseur 1b et le pion pilote 5 contre l'aile 2 jusqu'à ce que le pion pilote 5 s'engage dans le trou de l'aile destiné à le recevoir. La partie latérale du pare-chocs 1 étant alors bloquée en translation, l'opérateur pousse sur l'élargisseur 1b en direction de l'aile 2 de façon à engager chacun des clips de fixation 4 à travers les trous de l'aile en regard, la tête conique 4c du clip de fixation 4 réalisant le centrage automatique du clip 4 sur le trou par coulissement le long de la glissière.

Une fois l'élargisseur 1b clipsé sur l'aile 2, le reste du pare-chocs 1 est fixé rigidement, de manière connue en soi, contre la traverse avant du véhicule au moyen de vis de fixation.

Le dispositif de fixation selon l'invention présente l'avantage d'assurer le maintien de l'élargisseur 1b contre l'aile 2 tout en autorisant la dilatation différentielle de l'aile par rapport à l'élargisseur 1b. En effet, le bord arrière de l'aile 2 étant fixé de manière rigide au pied avant du véhicule et l'extrémité avant de l'aile 2 étant bloquée en translation par le pion pilote 5 de l'élargisseur 1b, une dilatation de l'élargisseur 1b et de l'aile 2, due à l'ensoleillement par exemple, conduit à l'augmentation progressive du galbe de l'aile 2 et de l'élargisseur 1b par leur arc-boutement vers l'extérieur du véhicule, grâce au coulissement des clips de fixation 4 dans les glissières 3. Toutefois, l'élargisseur 1b étant maintenu plaqué contre l'aile 2 et étant libre en translation par rapport à la surface de l'aile, cette augmentation du galbe de ces derniers est peu visible de l'extérieur du véhicule car l'aile 2 et l'élargisseur 1b conservent une forme homogène.

Par ailleurs, ce mode de réalisation particulier de l'invention présente l'avantage d'assurer un jeu constant entre l'aile 2 et le phare puisque, à proximité de ce dernier, l'aile 2 est bloquée en translation par le pion pilote 5 de l'élargisseur 1b.

Le dispositif de fixation selon l'invention permet donc d'utiliser un pare-chocs intégrant des élargisseurs pour recouvrir des ailes en matière plastique, telle que du NORYL. Or, l'utilisation de tels élargisseurs d'aile, venant recouvrir la surface extérieure d'une aile, permet à moindre coût, par le simple changement du pare-chocs et l'apport des élargisseurs d'aile, de modifier fortement l'esthétique d'un véhicule existant, pour l'adapter aux différents niveaux de gamme ou à une variante de type 4*4 par exemple.

Bien entendu, l'invention n'est nullement limitée au mode de réalisation décrit et illustré qui n'a été donné qu'à titre d'exemple. Ainsi, l'exemple illustre un pare-chocs avant de véhicule automobile intégrant des élargisseurs, mais le dispositif de fixation selon l'invention est également applicable pour les pare-chocs arrière munis d'élargisseurs d'aile.

## Revendications

1. Dispositif de fixation d'un élargisseur d'aile (1b) intégré à un pare-chocs (1) en matière plastique de véhicule automobile, ledit élargisseur d'aile (1b) recouvrant au moins partiellement une aile (2), également en matière plastique, et étant relié à ladite aile (2) par des moyens de fixation assurant le maintien de l'élargisseur (1b) contre l'aile (2) et autorisant le coulissement de l'élargisseur d'aile (1b) sur l'aile (2) selon l'axe de dilatation préférentielle, **caractérisé en ce que** lesdits moyens de fixation sont constitués de clips (4) montés coulissant dans des glissières (3), lesdits clips (4) présentant une tête expansible (4c) convergente venant s'insérer, par simple poussée, dans un trou ajusté.

2. Dispositif de fixation d'un élargisseur d'aile (1b) intégré à un pare-chocs (1) selon la revendication 1, **caractérisé en ce que** les glissières sont portées par la face intérieure de l'élargisseur (1b).

3. Dispositif de fixation d'un élargisseur d'aile (1b) intégré à un pare-chocs (1) selon la revendication 1, **caractérisé en ce que** lesdites glissières (3) sont obtenues directement de moulage avec l'aile plastique (2).

4. Dispositif de fixation d'un élargisseur d'aile (1b) intégré à un pare-chocs (1) selon l'une quelconque des revendications 1 à 2, **caractérisé en ce que** les glissières (3) sont orientées dans la direction de dilatation préférentielle de l'élargisseur (1b) par rapport à l'aile (2), lesdites glissières (3) présentant une longueur très faiblement supérieure à la longueur nécessaire à la dilatation, le diamètre des trous et l'extrémité convergente de la tête (4c) des clips étant adaptés pour garantir l'autocentrage du clip (4) sur le trou, quelque soit la position initiale du clip (4) dans la glissière (3) , lors de la mise en vis-à-vis de l'élargisseur (1b) par rapport à l'aile (2).

5. Dispositif de fixation d'un élargisseur d'aile (1b) intégré à un pare-chocs (1) selon l'une quelconque des revendications 1 à 3, **caractérisé en ce que** les clips (4) comporte un corps cylindrique muni de deux épaulements venant de part et d'autre des bords de la glissière (3), lesdits clips (4) étant insérés dans lesdites glissières (3) par une extrémité ouverte divergente de la glissière (3), ladite extrémité présentant un resserrement local réalisant le maintien du clip (4) dans ladite glissière (3).

6. Dispositif de fixation d'un élargisseur d'aile (1b) intégré à un pare-chocs (1) selon l'une quelconque des revendications 1 à 4, **caractérisé en ce que** le pare-chocs (1) est divisé en plusieurs parties et comporte des parties latérales du pare-chocs présentant un élément de guidage (6) venant coopérer avec le bord de l'aile (2) en regard pour guider l'élargisseur (1b) contre l'aile (2) lors du montage du pare-chocs.

7. Dispositif de fixation pour élargisseur d'aile (1b) intégré à un pare-chocs (1) selon la revendication 5, **caractérisé en ce que** ledit élément de guidage (6) comporte une patte horizontale (6a) venant s'insérer dans une rainure (2a) du bord de l'aile (2) pour guider verticalement l'élargisseur (1b) sur l'aile (2).

8. Dispositif de fixation pour élargisseur d'aile (1b) intégré à un pare-chocs (1) selon la revendication 6, **caractérisé en ce que** ladite patte horizontale (6a) est bordée d'une paroi verticale (6b) se rapprochant progressivement de la peau intérieure du pare-chocs (1) dans la direction de montage du pare-chocs (1), ladite paroi verticale (6b) venant plaquer transversalement la partie latérale du pare-chocs (1) contre la surface extérieure de l'aile lors de la mise en place du pare-chocs (1).

9. Dispositif de fixation pour élargisseur d'aile (1b) intégré à un pare-chocs (1) selon l'une quelconque des revendications 5 à 7, **caractérisé en ce que** ledit élargisseur (1b) comporte un pion pilote (5) coopérant avec un trou de l'aile pour positionner précisément ledit élargisseur (1b) par rapport à l'aile (2), ledit trou étant disposé à proximité de l'extrémité de l'aile (2) en bordure du phare du véhicule pour que ledit pion pilote (5) bloque transversalement ladite aile (2) à cet endroit.

10. Procédé de montage d'un pare-chocs (1) comportant un élargisseur d'aile (1b) muni d'un dispositif de fixation selon les revendications 4 et 8, **caractérisé en ce qu'**on approche les parties latérales du pare-chocs parallèlement à l'axe longitudinal du véhicule en engageant la patte de guidage (6) à l'intérieur de la rainure (2a) de l'aile (2) en regard, jusqu'à ce que le pion pilote (5) s'engage dans le trou de l'aile adapté, les clips de fixation de l'élargisseur étant ensuite insérés dans l'aile par simple poussée.

## Patentansprüche

1. Vorrichtung zur Befestigung einer Kotflügelverbreiterung (1b), integriert an einer Stoßstange (1) aus Plastikmaterial eines Kraftfahrzeugs, wobei die Kotflügelverbreitung (1b) einen Kotflügel (2) zumindest teilweise überdeckt, gleichfalls aus Plastikmaterial, und mit dem Kotflügel (2) verbunden ist durch Befestigungsmittel, die das Halten der Verbreiterung (1b) gegen den Kotflügel (2) sicherstellen und das Gleiten der Kotflügelverbreiterung (1b) auf dem Kotflügel (2) entlang der bevorzugten Verschiebungsachse erlauben, **dadurch kennzeichnet, dass** die Mittel zur Befestigung durch Clips (4) gebildet werden, die auf Laufschienen (3) gleiten, wobei die Clips (4) einen zusammenlaufenden ausdehnbaren Kopf (4c) aufweisen, der sich, durch einfaches Drücken in ein angepasstes Loch einfügt.

2. Vorrichtung zur Befestigung einer Kotflügelverbreiterung (1b), integriert an einer Stoßstange (1) gemäß Anspruch 1, **dadurch gekennzeichnet, dass** die Gleitschienen durch die Innenseite der Verbreiterung (1b) getragen werden.

3. Vorrichtung zur Befestigung einer Kotflügelverbreiterung (1b), integriert an einer Stoßstange (1) gemäß Anspruch 1, **dadurch gekennzeichnet, dass** die Gleitschienen (3) direkt aus dem Gießen, mit dem Plastik-Kotflügel (2) erhalten werden.

4. Vorrichtung zur Befestigung einer Kotflügelverbreiterung (1b), integriert an einer Stoßstange (1) gemäß einem der Ansprüche 1 bis 2, **dadurch gekennzeichnet, dass** die Gleitschienen (3) in der Richtung der bevorzugten Verschiebung der Verbreiterung (1b) im Verhältnis zu dem Kotflügel (2) orientiert sind, wobei die Gleitschienen (3) eine Länge aufweisen, die wenig größer ist als die notwendige Länge zur Verschiebung, wobei der Durchmesser der Löcher und das zusammenlaufende Ende des Kopfes (4c) der Klipps angepasst sind, um die Selbstzentrierung des Klipp (4) über dem Loch zu gewährleisten, was die initiale Position des Klipp (4) in der Gleitschiene (3) auch sei, bei Gegenübersetzen der Verbreiterung (1b) im Verhältnis zu dem Kotflügel (2).

5. Vorrichtung zur Befestigung einer Kotflügelverbreiterung (1b), integriert an einer Stoßstange (1) gemäß einem der Ansprüche 1 bis 3, **dadurch gekennzeichnet, dass** die Klipps (4) einen zylindrischen Körper aufweisen, der mit zwei Vorsprüngen versehen ist, die auf beiden Seiten der Begrenzung der Gleitschienen (3) herauskommen, wobei die Klipps (4) in die Gleitschienen (3) eingefügt sind über ein divergentes offenes Ende der Gleitschienen (3), wobei das Ende eine lokale Zusammenziehung aufweist, die den Halt des Klipps (4) in der Gleitschiene (3) realisiert.

6. Vorrichtung zur Befestigung einer Kotflügelverbreiterung (1b), integriert an einer Stoßstange (1) gemäß einem der Ansprüche 1 bis 4, **dadurch gekennzeichnet, dass** die Stoßstange (1) in mehrere Partien unterteilt ist und seitliche Partien der Stoßstange aufweist, die ein Führungselement (6) aufweisen, das mit dem Rand des Kotflügels (2) zusammenwirkt, um die Verbreiterung (1b) gegen den Kotflügel (2) zu führen, bei Montage der Stoßstange.

7. Vorrichtung zur Befestigung einer Kotflügelverbreiterung (1b), integriert an einer Stoßstange (1) gemäß Anspruch 5, **dadurch gekennzeichnet, dass** das Führungselement (6) eine horizontale Klaue (6a) aufweist, die sich in eine Rille (2a) der Begrenzung des Kotflügels (2) einfügt, um die Verbreiterung (1b) vertikal auf den Kotflügel (2) zu führen.

8. Vorrichtung zur Befestigung einer Kotflügelverbreiterung (1b), integriert an einer Stoßstange (1) gemäß Anspruch 6, **dadurch gekennzeichnet, dass** die horizontale Klaue (6a) eingefasst ist von einer vertikalen Wand (6b), die sich zunehmend der inneren Außenhaut der Stoßstange (1) in der Richtung der Montage der Stoßstange (1) nähert, wobei die vertikale Wand (6b) die seitliche Partie der Stoßstange (1) transversal gegen die äußere Oberfläche des Kotflügels drückt, bei Befestigung der Stoßstange (1).

9. Vorrichtung zur Befestigung einer Kotflügelverbreiterung (1b), integriert an einer Stoßstange (1) gemäß einem der Ansprüche 5 bis 7, **dadurch gekennzeichnet, dass** die Verbreiterung (1b) ein Leitstück (5) aufweist, das mit einem Loch des Kotflügels zusammenwirkt, um die Verbreiterung (1b) im Verhältnis zu dem Kotflügel (2) präzise zu positionieren, wobei das Loch in der Nähe des Endes des Kotflügels (2) am Rand des Scheinwerfers des Fahrzeugs angebracht ist, damit das Leitstück (5) den Kotflügel (2) transversal an dieser Stelle blockiert.

10. Verfahren zur Montage einer Stoßstange (1), umfassend eine Kotflügelverbreiterung (1b), versehen mit einer Vorrichtung zur Befestigung gemäß den Ansprüchen 4 bis 8, **dadurch gekennzeichnet, dass** an die seitlichen Partien der Stoßstange parallel zur Längsachse des Fahrzeugs herangegangen wird, indem die Führungsklaue (6) an der Innenseite der Rille (2a) des Kotflügels (2) in Eingriff genommen wird, bis das Leitstück (5) in dem Loch des angepassten Kotflügels einrastet, wobei die Klipps zur Befestigung der Verbreiterung in der Folge in den Kotflügel durch einfaches Drücken eingefügt werden.

## Claims

1. A device for securing a wing expanding member (1b) integrated in a bumper (1) of plastic material of an automobile vehicle, this wing expanding member (1b) at least partially covering a wing (2), also of plastic material, and being connected to this wing (2) by fastening means ensuring that the expanding member (1b) is held against the wing (2) and enabling the sliding of the wing expanding member (1b) on the wing (2) in the axis of preferential expansion, **characterised in that** the fastening means are formed by clips (4) mounted to slide in slideways (3), these clips having a convergent expansible head (4c) which is inserted, by a simple thrust action, in an appropriate hole.

2. A device for securing a wing expanding member (1b) integrated in a bumper (1) as claimed in claim 1, **characterised in that** the slideways are borne by the inner surface of the expanding member (1b).

3. A device for securing a wing expanding member (1b) integrated in a bumper (1) as claimed in claim 1, **characterised in that** the slideways (3) are obtained directly by moulding with the plastic wing (2).

4. A device for securing a wing expanding member (1b) integrated in a bumper (1) as claimed in any one of claims 1 and 2, **characterised in that** the slideways (3) are oriented in the direction of preferential expansion of the expanding member (1b) with respect to the wing (2), these slideways (3) having a length very slightly greater than the length necessary for expansion, the diameter of the holes and the convergent end of the head (4c) of the clips being adapted to ensure the self-centring of the clip (4) on the hole, whatever the initial position of the clip (4) in the slideway (3), when the expanding member (1b) is being positioned opposite the wing (2).

5. A device for securing a wing expanding member (1b) integrated in a bumper (1) as claimed in any one of claims 1 to 3, **characterised in that** the clips (4) comprise a cylindrical body provided with two shoulders inserted on either side of the edges of the slideway (3), the clips (4) being inserted in the slideways (3) via an open divergent end of the slideway (3), this end having a local narrowing in order to hold the clip (4) in the slideway (3).

6. A device for securing a wing expanding member (1b) integrated in a bumper (1) as claimed in any one of claims 1 to 4, **characterised in that** the bumper (1) is divided into a plurality of portions and comprises lateral bumper portions having a guide member (6) which cooperates with the facing edge of the wing (2) in order to guide the expanding member (1b) against the wing (2) during the assembly of the bumper.

7. A device for securing a wing expanding member (1b) integrated in a bumper (1) as claimed in claim 5, **characterised in that** the guide member (6) comprises a horizontal lug (6a) which is inserted into a groove (2a) of the edge of the wing (2) in order vertically to guide the expanding member (1b) with respect to the wing (2).

8. A device for securing a wing expanding member (1b) integrated in a bumper (1) as claimed in claim 6, **characterised in that** the horizontal lug (6a) is bordered by a vertical wall (6b) gradually approaching the inner skin of the bumper (1) in the direction of assembly of the bumper (1), this vertical wall (6b) transversely thrusting the lateral portion of the bumper (1) against the outer surface of the wing during the positioning of the bumper (1).

9. A device for securing a wing expanding member (1b) integrated in a bumper (1) as claimed in any one of claims 5 to 7, **characterised in that** the expanding member (1b) comprises a pilot pin (5) cooperating with a hole of the wing (2) in order precisely to position the expanding member (1b) with respect to the wing (2), this hole being disposed in the vicinity of the end of the wing (2) bordering the headlamp of the vehicle so that the pilot pin (5) transversely locks the wing (2) at this location.

10. A method of assembly of a bumper (1) comprising a wing expanding member (1b) provided with a fastening device as claimed in claims 4 to 8, **characterised in that** the lateral portions of the bumper are moved parallel to the longitudinal axis of the vehicle, engaging the guide lug (6) within the groove (2a) of the facing wing (2), until the pilot pin (5) engages in the appropriate hole of the wing, the fastening clips of the expanding member then being inserted in the wing by a simple thrust action.
